# EUROPÄISCHE PATENTANMELDUNG

(11) **EP 1 998 074 A2**
(43) Veröffentlichungstag der Anmeldung: **03.12.2008**
(21) Anmeldenummer: 08008663.0
(22) Anmeldetag: 08.05.2008
(51) Int. Cl.: F16F 15/121, F16F 1/32

(54) **Torsionsschwingungsdämpfer**

(30) Priorität: 29.05.2007 DE 102007024938
(71) Anmelder: LuK Lamellen und Kupplungsbau Beteiligungs KG, 77815 Bühl (DE)
(72) Erfinder: Friedmann, Oswald, 77839 Lichtenau (DE)

(57) **Zusammenfassung**

Federnder Energiespeicher mit wenigstens einem sich um eine Achse erstreckenden scheibenförmigen, ringartigen Grundkörper, der in Bezug auf die Achse einen Außenrand und einen Innenrand aufweist.

## Beschreibung

Die Erfindung betrifft einen Energiespeicher sowie einen mit einem solchen ausgerüsteten Torsionsschwingungsdämpfer. Derartige Torsionsschwingungsdämpfer haben ein Eingangsteil und ein Ausgangsteil, die drehbar zueinander positioniert sind und entgegen der Wirkung von Energiespeichern und gegebenenfalls Hysteresemitteln zueinander verdrehbar sind.

Bei den bisher insbesondere im Automobilbau zum Einsatz kommenden Torsionsschwingungsdämpfern werden üblicherweise so genannte Schraubendruckfedern als Energiespeicher eingesetzt. Bei so genannten Zweimassenschwungrädern, wie sie beispielsweise durch die DE 37 21 710 C2 bekannt geworden sind, kommen Bogenfedern zum Einsatz, deren Windungen sich unter Fliehkrafteinwirkung reibend an einem Bauteil abstützen.

Der vorliegenden Erfindung lag die Aufgabe zugrunde, einen Energiespeicher zu schaffen, der insbesondere in Verbindung mit Torsionsschwingungsdämpfern Verwendung finden kann. Der erfindungsgemäße Energiespeicher soll dabei eine gute Energiespeicherkapazität aufweisen und eine überwiegend fliehkraftunabhängige Elastizität bzw. Federung besitzen. Es soll also durch Einsatz des erfindungsgemäßen Energiespeichers auch bei hohen Drehzahlen eine praktisch hysteresefreie bzw. reibungsfreie Verdrehung der über diesen gekoppelten Bauteilen ermöglicht werden. Sofern eine Hysterese bzw. eine Reibungsdämpfung innerhalb des Torsionsschwingungsdämpfers erforderlich sein sollte, wird diese gezielt durch entsprechende Maßnahmen bzw. Mittel in das System eingebracht. Es soll also verhindert werden, dass, wie bei dem vorerwähnten Stand der Technik, der Energiespeicher zwangsweise eine drehzahlabhängige Dämpfung bzw. Hysterese im System erzeugt.

Gemäß der Erfindung wird dies mittels eines federnden Energiespeichers erzielt, der wenigstens einen sich um eine Achse erstreckenden scheibenförmigen, ringartigen Grundkörper aufweist, der in Bezug auf die Achse einen Außenrand und einen Innenrand aufweist, wobei wenigstens einer der Ränder des ringartigen Grundkörpers mit wenigstens in radialer Richtung verlaufenden Zug- und/oder Druckstäben verbunden ist, die mit ihren dem ringartigen Grundkörper abgewandten Bereichen mit einem gegenüber dem ringartigen Grundkörper verdrehbaren Bauteil verbindbar sind, und zwar derart, dass aufgrund einer Verdrehung zwischen dem ringartigen Grundkörper und dem mit den Stäben verbindbaren Bauteil Zug- und/oder Druckkräfte in den ringartigen Grundkörper einleitbar sind, welche eine federnde Verformung, vorzugsweise in Form einer Durchmesserveränderung des ringartigen Grundkörpers, bewirken. Durch die mittels der Stäbe radial in den ringartigen Grundkörper eingeleiteten Kräfte wird der Grundkörper elastisch im Sinne einer Durchmesserverringerung oder Durchmesservergrößerung verformt, so dass aufgrund der dadurch in den Grundkörper eingebrachten Zug- und/oder Druckspannungen Energie gespeichert werden kann. Die durchschnittliche Durchmesserveränderung des ringartigen Grundkörpers kann dabei in der Größenordnung von 0,1 bis 1 mm liegen, wobei für manche Anwendungsfälle auch größere Durchmesserveränderungen sinnvoll bzw. möglich sind. Die mögliche elastische Durchmesserveränderung des ringartigen Grundkörpers ist abhängig von der Größe des ringartigen Grundkörpers und vom Durchmesserverhältnis zwischen dem äußeren und dem inneren Durchmesser eines solchen Grundkörpers. Ein weiterer Parameter ist die Dicke des einen solchen ringartigen Grundkörper bildenden Materials, das vorzugsweise Federstahl ist.

Durch Einbringung von Ausnehmungen bzw. besonderen Formen von Ausschnitten in den ringartigen Grundkörper können dessen Federeigenschaften beeinflusst werden. Die Ausnehmungen bzw. Ausschnitte sind dabei vorzugsweise gleichmäßig über den Umfang des ringartigen Grundkörpers verteilt. Die Ausschnitte bzw. Ausnehmungen können dabei eine umfangsmäßige, definierte Positionierung gegenüber den Stäben aufweisen.

Die mit wenigstens einem ringartigen Grundkörper verbundenen Stäbe können in vorteilhafter Weise zumindest annähernd radial verlaufen und in Umfangsrichtung zumindest im Wesentlichen gleichmäßig verteilt sein.

Besonders vorteilhaft kann es sein, wenn der erfindungsgemäße, federnde Energiespeicher einen radial äußeren und einen kleineren radial inneren ringartigen Grundkörper aufweist, welche über die Stäbe miteinander verbunden sind. Die Verbindung zwischen den Stäben und dem wenigstens einen ringartigen Grundkörper ist vorzugsweise derart ausgebildet, dass eine Verschwenkung der Stäbe gegenüber dem ringartigen Grundkörper möglich ist. Über die Länge betrachtet, können die Stäbe wiederum eine bestimmte Biegelinie beim Verdrehen der miteinander gekoppelten Bauteile aufweisen.

In vorteilhafter Weise können die Stäbe und der wenigstens eine ringartige Grundkörper einstückig ausgebildet sein. Vorzugsweise sind die erfindungsgemäßen Energiespeicher aus Federstahlblech hergestellt. Das zur Herstellung verwendete Blechmaterial kann dabei eine Dicke in der Größenordnung von 0,5 bis 3 mm aufweisen. Für manche Anwendungsfälle kann es auch zweckmäßig sein, wenn die Materialdicke geringer oder größer ist.

Zur Herstellung der Konturen eines erfindungsgemäßen Energiespeichers eignen sich insbesondere hochenergetische Strahlschneidverfahren, wie zum Beispiel Laserstrahlschneiden, oder Flüssigkeitsstrahlschneiden, wie zum Beispiel Wasserstrahlschneiden.

Wie bereits erwähnt, können die erfindungsgemäß ausgebildeten Energiespeicher insbesondere in Verbindung mit Torsionsschwingungsdämpfern Verwendung finden, die zumindest zwei relativ zueinander verdrehbare Elemente aufweisen.

Zur Vergrößerung des zwischen den beiden Elementen möglichen Verdrehwinkels können mehrere erfindungsgemäß ausgebildete Energiespeicher in Reihe geschaltet werden. Auch ist es möglich, zur Bildung eines Energiespeicherbauteils mehrere aus dünnem Blechmaterial hergestellte, scheibenförmige Energiespeicher aufeinander zu schichten und derart miteinander zu verbinden, dass diese parallel wirksam sind, also deren Wirkung sich addiert.

Zur Bildung eines Torsionsschwingungsdämpfers ist es besonders zweckmäßig, wenn die zwischen zwei zueinander verdrehbaren Elementen vorgesehenen wenigstens zwei scheibenförmigen Energiespeicher einen radial äußeren und einen radial inneren ringartigen Grundkörper besitzen, die über Zugstäbe miteinander verbunden sind, wobei die scheibenförmigen Energiespeicher über ihre äußeren oder inneren ringartigen Grundkörper miteinander verbunden und in Reihe zwischen den beiden zueinander verdrehbaren Elementen wirksam sind.

Besonders vorteilhaft kann es sein, wenn eine Mehrzahl von in Reihe wirksamen, scheibenförmigen Energiespeichern vorgesehen ist, wobei, in Richtung der Rotationsachse des Torsionsschwingungsdämpfers betrachtet, die aufeinander folgenden, scheibenförmigen Energiespeicher derart miteinander verbunden sind, dass ein axial zwischen zwei scheibenförmigen Energiespeichern angeordneter dritter Energiespeicher mit seinem radial äußeren ringartigen Grundkörper mit dem einen der beiden scheibenförmigen Energiespeicher und mit seinem radial inneren ringartigen Grundkörper mit dem anderen der zwei scheibenförmigen Energiespeicher drehgekoppelt ist.

Die Koppelung bzw. Verbindung zwischen den einzelnen Energiespeichern kann dabei über einen Formschluss, wie zum Beispiel Nietverbindungen, oder mittels Materialschluss, wie zum Beispiel Schweißverbindungen, erfolgen.

In besonders vorteilhafter Weise kann ein erfindungsgemäß ausgebildeter Torsionsschwingungsdämpfer Bestandteil eines Zweimassenschwungrades sein oder ein solches bilden.

Weitere Merkmale bzw. zweckmäßige Weiterbildungen sowie funktionelle und herstellungstechnische Vorteile eines erfindungsgemäß ausgestalteten, federnden Energiespeichers bzw. eines damit ausgestatteten Torsionsschwingungsdämpfers ergeben sich aus der nachfolgenden Beschreibung.

Dabei zeigt:
- Figur 1: einen schematischen Schnitt durch einen erfindungsgemäß ausgestalteten Torsionsschwingungsdämpfer,
- Figur 2: das Funktionsprinzip eines erfindungsgemäßen Energiespeichers, die
- Fig. 3 bis 5: Ausgestaltungsmöglichkeiten von Energiespeichern,
- Figur 6: eine mittels erfindungsgemäß ausgestalteten Energiespeichern erzielbare Federkennlinie eines Dämpfers.

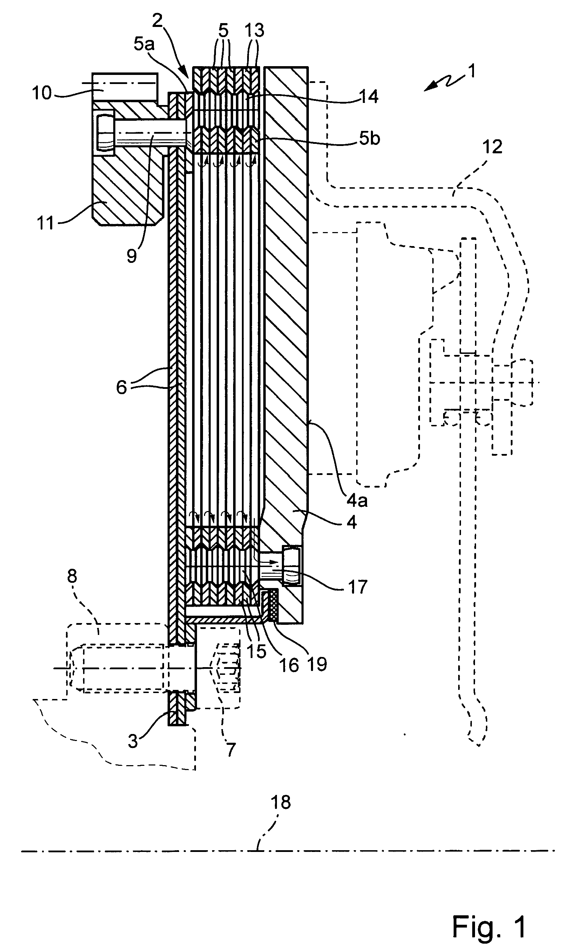

Der in Figur 1 im Halbschnitt dargestellte Torsionsschwingungsdämpfer 1 bildet ein so genanntes Zweimassenschwungrad 2, das wenigstens ein Eingangsteil 3 und ein Ausgangsteil 4 aufweist. Das Eingangsteil 3 und das Ausgangsteil 4 sind entgegen der Wirkung von scheiben- bzw. plattenartigen Energiespeichern 5 relativ zueinander verdrehbar. Obwohl lediglich ein plattenförmiger Energiespeicher 5 zwischen Eingangsteil 3 und Ausgangsteil 4 vorgesehen werden kann, sind bei dem dargestellten Ausführungsbeispiel eine Vielzahl derartiger Energiespeicher 5 axial hintereinander bzw. axial geschichtet vorgesehen.

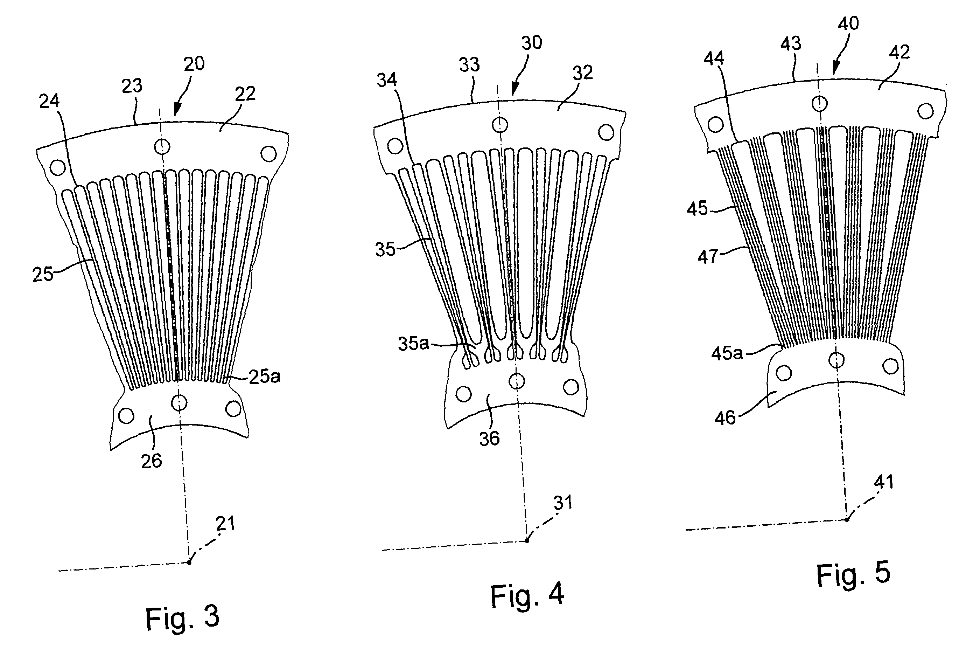

Das Eingangsteil 3 ist bei dem dargestellten Ausführungsbeispiel durch zwei scheibenförmige Blechteile 6 gebildet, die radial innen mittels Befestigungsmitteln, wie Schrauben 7, mit der Abtriebswelle 8 eines Motors antriebsmäßig koppelbar sind. Radial außen ist das Eingangsteil 3 mit wenigstens einem scheibenförmigen Energiespeicher 5a drehfest verbunden. Dies kann beispielsweise mittels Nietverbindungen 9 erfolgen. Radial außen trägt das Eingangsteil 3 weiterhin einen Anlasserzahnkranz 10, welcher hier derart dimensioniert ist, dass er eine Zusatzträgheitsmasse 11 bildet. Die einzelnen scheibenförmigen Energiespeicher 5a bzw. 5 können eine Ausgestaltung aufweisen, wie sie in den Figuren 3 bis 5 dargestellt ist. Das Ausgangsteil 4 bildet bei dem dargestellten Ausführungsbeispiel eine so genannte Sekundärmasse, welche eine Reibfläche 4a bildet, die zusammenwirkt mit wenigstens einem Reibbelag einer Kupplungsscheibe. Weiterhin nimmt das als Sekundärmasse ausgebildete Ausgangsteil 4 eine Reibungskupplung 12 auf, welche strichliert dargestellt ist. Die erfindungsgemäß ausgestalteten Energiespeicher können jedoch ganz allgemein bei Torsionsschwingungsdämpfern Verwendung finden, die wenigstens zwei relativ zueinander verdrehbare Bauteile aufweisen, wie dies beispielsweise auch bei Kupplungsscheiben und bei Riemendämpfern der Fall ist.

Aus den Figuren 3 bis 5 ist ersichtlich, dass die erfindungsgemäß ausgestalteten Energiespeicher 20, 30, 40, welche die Energiespeicher 5 gemäß Figur 1 bilden können, jeweils wenigstens einen sich um eine Achse 21, 31, 41 erstreckenden scheibenförmigen, ringartigen Grundkörper 22, 32, 42 besitzen, der in Bezug auf die entsprechende Achse 21, 31, 41 einen Außenrand 23, 33, 43 und einen Innenrand bzw. Innenbereich 24, 34, 44 aufweist. Bei den dargestellten Ausführungsbeispielen von Energiespeichern 20, 30, 40 gehen von dem Innenrand 24, 34, 44 radial nach innen gerichtete Zugstäbe 25, 35, 45 aus, die mit ihren dem ringartigen Grundkörper 22, 32, 42 abgewandten Bereichen bzw. Enden 25a, 35a, 45a mit einem anderen Bauteil, wie zum Beispiel dem Eingangsteil 3 oder dem Ausgangsteil 4 oder aber einem weiteren, in Reihe geschalteten Energiespeicher 5, 20, 30, 40 verbindbar sind. Bei dem dargestellten Ausführungsbeispiel gemäß den Figuren 3 bis 5 erfolgt diese Verbindung mittels eines weiteren ringartigen, radial inneren Grundkörpers 26, 36, 46, der ähnlich ausgebildet und mit den entsprechenden Zugstäben 25, 35, 45 verbunden ist, wie der radial äußere ringartige Grundkörper 22, 32, 42.

Bei den dargestellten Ausführungsbeispielen sind die Energiespeicher 20, 30, 40 einstückig ausgebildet. In vorteilhafter Weise können derartige Energiespeicher 20, 30, 40 durch Laserstrahlschneiden hergestellt werden. Die Dicke der vorzugsweise aus Federstahl hergestellten Energiespeicher kann in der Größenordnung von 0,2 bis 3 mm liegen, vorzugsweise in der Größenordnung von 0,5 bis 1,8 mm. Für manche Anwendungsfälle kann es jedoch auch zweckmäßig sein, wenn das Ausgangsmaterial eine größere Dicke aufweist. Bei Verwendung von dünnem Blechmaterial kann es auch vorteilhaft sein, wenn zur Bildung eines "resultierenden" Energiespeichers mehrere solcher scheibenförmiger Energiespeicher geschichtet und miteinander derart verbunden werden, dass sie parallel wirksam sind, also deren Federwirkungen sich addieren. Derartige "resultierende" Energiespeicher können dann wiederum in Reihe geschaltet werden, wodurch ein größerer Relativverdrehwinkel zwischen dem Eingangsteil 3 und dem Ausgangsteil 4 möglich ist.

Vorteilhaft kann es sein, wenn die Materialdicke des die Energiespeicher 22, 32, 42 bildenden Federstahls größer ist als die umfangsmäßige Erstreckung bzw. Breite der Zugstäbe 25, 35, 45.

Bei der Ausgestaltung gemäß Figur 5 werden zur Bildung der Zugstäbe 45 verhältnismäßig breite Bereiche 47 aus dem Blechmaterial gebildet, welche durch Laserstrahlschneiden in einzelne, in Umfangsrichtung schmale Zugstäbe 45 aufgetrennt sind.

Die Übergangsbereiche zwischen den einzelnen Zugstäben 25, 35, 45 und den radial inneren und radial äußeren Grundkörpern 26, 36, 46 bzw. 22, 32, 42 sind derart ausgestaltet, dass eine Verschwenkung bzw. umfangsmäßige Auslenkung der Zugstäbe 25, 35, 45 gegenüber diesen Grundkörpern möglich ist.

Aus Figur 1 ist erkennbar, wie die einzelnen Energiespeicher in Reihe geschaltet sind. Dies ist insbesondere anhand des mittels der "Bogenpfeile" angedeuteten Kraftflusses erkennbar. Es ist ersichtlich, dass jeweils zwei benachbarte, radial äußere ringförmige Grundkörper 13 und jeweils zwei radial innere ringförmige Grundkörper 15 hier jeweils mittels Nietverbindungen 14 bzw. 16 miteinander gekoppelt sind. Die sich axial am Ende befindenden Energiespeicher 5a, 5b sind mit dem Eingangsteil 3 bzw. dem Ausgangsteil 4 fest verbunden. Der scheibenartige Energiespeicher 5b ist über seinen radial inneren, ringartigen Grundkörper 15 mittels Nietverbindungen 17 mit dem Ausgangsteil 4 verbunden. Anstatt von Nietverbindungen 9, 14, 16, 17, können auch andere formschlüssige Verbindungen verwendet werden. Auch können entsprechende Bereiche der einzelnen Energiespeicher 5 miteinander verschweißt sein.

Aus Figur 1 ist auch erkennbar, dass, in Richtung der Rotationsachse 18 des Torsionsschwingungsdämpfers 1 betrachtet, die axial aufeinander folgenden, scheibenförmigen Energiespeicher 5 derart miteinander verbunden sind, dass ein axial zwischen zwei scheibenförmigen Energiespeichern angeordneter Energiespeicher mit seinem radial äußeren, ringartigen Grundkörper 13 mit dem einen der beiden Energiespeicher und mit seinem radial inneren, ringartigen Grundkörper 15 mit dem anderen der beiden Energiespeicher drehgekoppelt ist.

Obwohl das Eingangsteil 3 gegenüber dem Ausgangsteil 4 über eine Lagerung, wie zum Beispiel Wälzlagerung oder Gleitlagerung, in radialer Richtung positioniert sein kann, kann für viele Anwendungsfälle auf den Einsatz einer derartigen Lagerung verzichtet werden, da die Zentrierung bzw. radiale Positionierung von Eingangsteil 3 und Ausgangsteil 4 mittels der erfindungsgemäß ausgestalteten Energiespeicher 5 erfolgen kann.

Bei dem in Figur 1 dargestellten Ausführungsbeispiel werden die zumindest für die Betätigung der Reibungskupplung 12 erforderlichen Axialkräfte mittels eines Axiallagers 19 abgestützt. Das Axiallager 19 ist bei dem dargestellten Ausführungsbeispiel als axiales Gleitlager ausgebildet. Die Lagerung 19 kann zumindest im Wesentlichen radial innerhalb der ringförmigen Grundkörper 15 bzw. zumindest teilweise auf radialer Höhe dieser ringartigen Grundkörper 15 vorgesehen werden.

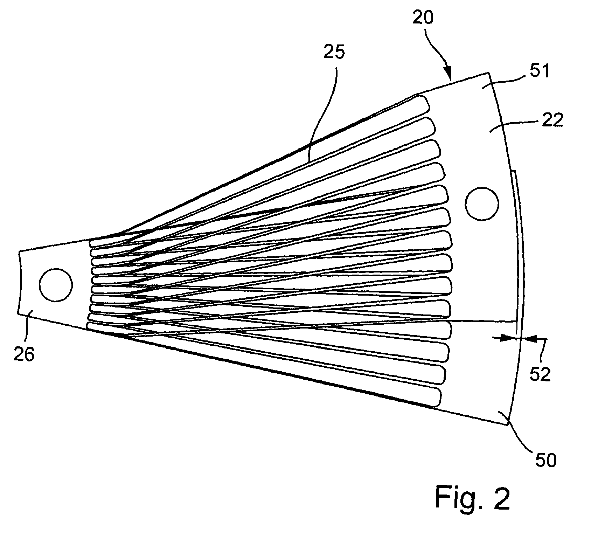

Anhand der Figur 2, welche schematisch das Verformungsbild eines nach dem Prinzip der Figur 3 ausgestalteten Energiespeichers 20 darstellt, wird die prinzipielle Funktionsweise eines erfindungsgemäßen Energiespeichers beschrieben. In Figur 2 ist die Position 50 eines nicht beanspruchten Energiespeichers 20 dargestellt. Der mit 51 gekennzeichnete Verformungszustand des Energiespeichers 20 wird durch eine entsprechende Winkelverdrehung zwischen dem Eingangsteil 3 und dem Ausgangsteil 4 des entsprechenden Torsionsschwingungsdämpfers erzeugt. Aufgrund dieser winkelmäßigen Verdrehungen erfahren die zunächst radial ausgerichteten Zugstäbe 25 eine Verformung und werden in Umfangsrichtung aus der zunächst radialen Position ausgelenkt, so dass sie eine umfangsmäßige Schrägstellung einnehmen. Dadurch wird tendenzmäßig eine radiale Verkürzung des Abstandes zwischen dem radial äußeren Grundkörper 22 und dem radial inneren Grundkörper 26 bewirkt. Diese Abstandsverkürzung bewirkt, dass der radial äußere Grundkörper 22 und der radial innere Grundkörper 26 in radialer Richtung gegeneinander gezogen werden. Dadurch wird wiederum eine Durchmesserveränderung des radial äußeren und/oder des radial inneren Grundkörpers 22 bzw. 26 erzeugt. Eine solche Durchmesserveränderung kann mehrere zehntel Millimeter betragen. In Figur 2 ist nur für den radial äußeren Grundkörper 22 diese Durchmesserveränderung anhand des äußeren Durchmesserbereiches des Grundkörpers 22 dargestellt und mit dem Bezugszeichen 52 gekennzeichnet. Der Grundkörper 22 und/oder 26 dient also als Energiespeicher, wobei die Energie durch Spannungsaufbau, insbesondere Druckspannungen im Material, erzeugt wird.

Die Zugstäbe 25 bzw. Speichen 25 sind vorzugsweise derart ausgelegt, dass diese vorzugsweise nur unwesentlich gedehnt werden und somit nur wenig Energie speichern können. Die Zugstäbe bzw. Speichen 25, 35, 45 sind vorzugsweise derart ausgestaltet, dass sich mit der überlagerten Zugspannung eine praktisch konstante Spannung über die ganze Speichenlänge ergibt.

Wie aus Figur 5 ersichtlich ist, kann der Abstand zwischen einzelnen Zugstäben 45 praktisch auf die erforderliche Schnittbreite zur Herstellung der einzelnen Zugstäbe 45 reduziert werden. Diese Schnittbreite ist bei Verwendung von Laserstrahlschneiden oder Wasserstrahlschneiden sehr gering. Durch Anwendung derartiger Schneidtechniken ergibt sich eine Vielzahl von Ausgestaltungsmöglichkeiten für die Anordnung bzw. Ausbildung der entsprechenden Zugstäbe. So ist beispielsweise in Figur 3 eine umfangsmäßig beabstandete Anordnung zwischen den einzelnen Zugstäben 25 vorgesehen, wohingegen in Figur 5 eine gruppenweise umfangsmäßige Verteilung der Zugstäbe 45 vorhanden ist.

Bei der Ausgestaltung gemäß Figur 1 sind die motorseitigen Antriebsbleche, welche hier das Eingangsteil 3 bilden, torsions- bzw. verdrehsteif ausgebildet.

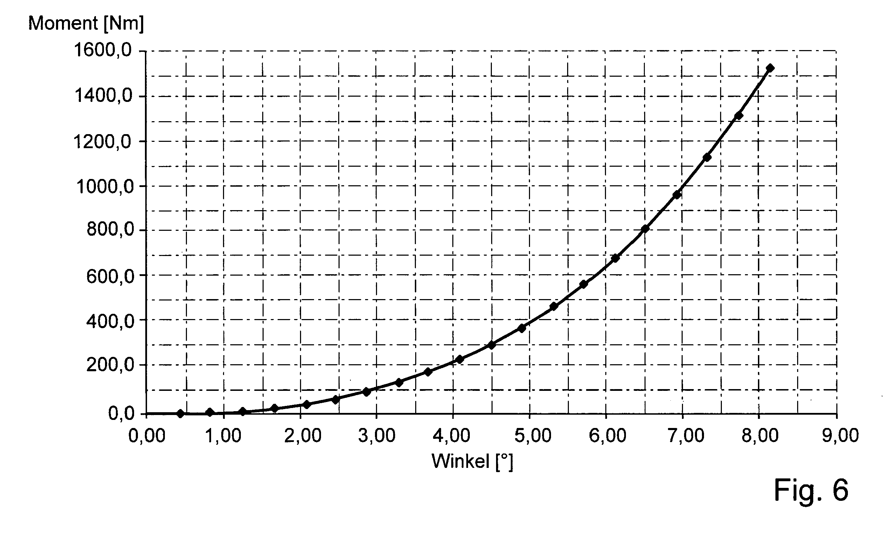

In Figur 6 ist eine mit einem erfindungsgemäß ausgestalteten, plattenförmigen Energiespeicher erzielbare Torsions- bzw. Federkennlinie dargestellt. Es ist erkennbar, dass mit zunehmendem Verdrehwinkel, zum Beispiel zwischen dem äußeren Grundkörper 22 und dem inneren Grundkörper 26 des Energiespeichers gemäß Figur 2, die Federkennlinie progressiv verläuft, das bedeutet, dass mit zunehmendem Verdrehwinkel der Verdrehwiderstand des Energiespeichers zunimmt.

Um das System gegen Übermomente zu schützen, kann es zweckmäßig sein, wenn im Drehmomentübertragungsweg zwischen dem Eingangsteil 3 und dem Ausgangsteil 4 bzw. im Drehmomentübertragungsweg zwischen dem Eingangsteil 3 und der Reibungskupplung 12 ein Drehmomentbegrenzer, wie beispielsweise eine Rutschkupplung, angeordnet wird. Das Rutschmoment einer solchen Rutschkupplung liegt vorzugsweise zumindest geringfügig unterhalb des Rutschmomentes der voll geschlossenen Reibungskupplung 12. Das Rutschmoment einer derartigen Rutschkupplung soll dabei oberhalb des von dem Antriebsmotor abgegebenen Nominaldrehmomentes liegen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Torsionsschwingungsdämpfer
- 2: Zweimassenschwungrad
- 3: Eingangsteil
- 4: Ausgangsteil
- 4a: Reibfläche
- 5: Energiespeicher
- 5a: Energiespeicher
- 5b: Energiespeicher
- 6: Blechteile
- 7: Schrauben
- 8: Abtriebswelle
- 9: Nietverbindungen
- 10: Anlasserzahnkran
- 11: Zusatzträgheitsmasse
- 12: Reibungskupplung
- 13: Äußerer Grundkörper
- 14: Nietverbindungen
- 15: Innerer Grundkörper
- 16: Nietverbindungen
- 17: Nietverbindungen
- 18: Rotationsachse
- 19: Axiallager
- 20: Energiespeicher
- 21: Achse
- 22: Äußerer Grundkörper
- 23: Außenrand
- 24: Innenrand
- 25: Zugstäbe
- 25a: Bereich
- 20: Energiespeicher
- 21: Achse
- 22: Grundkörper
- 23: Außenrand
- 24: Innenrand
- 25: Zugstäbe
- 25a: Enden
- 26: innerer Grundkörper
- 27: Außenrand
- 28: Innenrand
- 29: Zugstäbe
- 35a: Bereich
- 30: Energiespeicher
- 31: Achse
- 32: Grundkörper
- 33: Außenrand
- 34: Innenrand
- 35: Zugstäbe
- 35a: Enden
- 36: innerer Grundkörper
- 37: Außenrand
- 38: Innenrand
- 39: Zugstäbe
- 45a: Bereich
- 40: Energiespeicher
- 41: Achse
- 42: Grundkörper
- 43: Außenrand
- 44: Innenrand
- 45: Zugstäbe
- 45a: Enden
- 46: innerer Grundkörper
- 47: Bereiche
- 48: -
- 49: -
- 50: Position eines nicht beanspruchten Energiespeichers
- 51: Verformungszustand

## Patentansprüche

1. Federnder Energiespeicher mit wenigstens einem sich um eine Achse erstreckenden scheibenförmigen, ringartigen Grundkörper, der in Bezug auf die Achse einen Außenrand und einen Innenrand aufweist, **dadurch gekennzeichnet, dass** wenigstens einer der Ränder des ringartigen Grundkörpers mit wenigstens in radialer Richtung verlaufenden Zug- und/oder Druckstäben verbunden ist, die mit ihren dem ringartigen Grundkörper abgewandten Bereichen mit einem gegenüber dem ringartigen Grundkörper verdrehbaren Bauteil verbindbar sind, derart, dass aufgrund einer Verdrehung zwischen dem ringartigen Grundkörper und dem mit den Stäben verbindbaren Bauteil Zug- und/oder Druckkräfte in den ringartigen Grundkörper einleitbar sind, welche eine federnde Verformung in Form einer Durchmesserveränderung des ringartigen Grundkörpers bewirken.

2. Federnder Energiespeicher nach Anspruch 1, **dadurch gekennzeichnet, dass** die Stäbe zumindest annähernd radial verlaufen und in Umfangsrichtung zumindest im Wesentlichen gleichmäßig verteilt sind.

3. Federnder Energiespeicher nach Anspruch 1 oder 2, **dadurch gekennzeichnet, dass** dieser einen radial äußeren und einen kleineren radial inneren ringartigen Grundkörper aufweist, die über die Stäbe miteinander verbunden sind.

4. Federnder Energiespeicher nach einem der Ansprüche 1 bis 3, **dadurch gekennzeichnet, dass** die Stäbe mit dem wenigstens einen ringartigen Grundkörper verschwenkbar verbunden sind.

5. Federnder Energiespeicher nach einem der Ansprüche 1 bis 4, **dadurch gekennzeichnet, dass** die Stäbe mit dem wenigstens einen Grundkörper einstückig ausgebildet sind.

6. Federnder Energiespeicher nach einem der Ansprüche 1 bis 5, **dadurch gekennzeichnet, dass** dieser aus Federstahl besteht.

7. Federnder Energiespeicher nach einem der Ansprüche 1 bis 6, **dadurch gekennzeichnet, dass** dieser aus Blechmaterial herausgeformt ist.

8. Federnder Energiespeicher nach einem der Ansprüche 1 bis 7, **dadurch gekennzeichnet, dass** die Dicke des diesen bildenden Materials in der Größenordnung von 0,5 bis 3 mm liegt.

9. Federnder Energiespeicher nach einem der Ansprüche 1 bis 8, **dadurch gekennzeichnet, dass** die Konturen des Energiespeichers zumindest teilweise mittels Laserstrahlschneiden gebildet sind.

10. Torsionsschwingungsdämpfer mit zwei relativ zueinander verdrehbaren Elementen, **dadurch gekennzeichnet, dass** diese mit dem wenigstens einen Energiespeicher derart verbunden sind, dass der Energiespeicher zwischen den beiden Elementen als Feder wirksam ist.

11. Torsionsschwingungsdämpfer nach Anspruch 10, **dadurch gekennzeichnet, dass** mehrere scheibenförmige Energiespeicher in Reihe geschaltet sind.

12. Torsionsschwingungsdämpfer nach Anspruch 10 oder 11, **dadurch gekennzeichnet, dass** die Energiespeicher einen radial äußeren und einen radial inneren ringartigen Grundkörper besitzen, die über Zugstäbe miteinander verbunden sind, wobei wenigstens zwei in Reihe geschaltete, scheibenförmige Energiespeicher über ihren äußeren oder inneren ringartigen Grundkörper miteinander verbunden sind und in Reihe zwischen den beiden zueinander verdrehbaren Elementen wirksam sind.

13. Torsionsschwingungsdämpfer nach einem der Ansprüche 1 bis 12, **dadurch gekennzeichnet, dass** eine Mehrzahl von in Reihe wirksamen, scheibenförmigen Energiespeichern vorgesehen ist, wobei, in Richtung der Rotationsachse des Torsionsschwingungsdämpfers betrachtet, die aufeinander folgenden, scheibenförmigen Energiespeicher derart miteinander verbunden sind, dass ein axial zwischen zwei scheibenförmigen Energiespeichern angeordneter Energiespeicher mit seinem radial äußeren, ringartigen Grundkörper mit dem einen der beiden Federelemente und mit seinem radial inneren ringartigen Grundkörper mit dem anderen der beiden Elemente drehgekoppelt ist.

14. Torsionsschwingungsdämpfer nach Anspruch 13, **dadurch gekennzeichnet, dass** die Drehkoppelung zwischen den in Reihe geschalteten, scheibenförmigen Energiespeichern über einen Formschluss erfolgt.

15. Torsionsschwingungsdämpfer nach einem der Ansprüche 10 bis 13, **dadurch gekennzeichnet, dass** die Koppelung zwischen den in Reihe geschalteten, scheibenförmigen Energiespeichern mittels eines Materialschlusses erfolgt.

16. Torsionsschwingungsdämpfer nach einem der Ansprüche 10 bis 15, **dadurch gekennzeichnet, dass** dieser Bestandteil eines Zweimassenschwungrades ist oder ein solches bildet.
